Europäisches Patentamt

European Patent Office

Office européen des brevets

(11) Publication number: **0 354 279**
**A1**

# EUROPEAN PATENT APPLICATION

(21) Application number: 88307345.4

(51) Int. Cl.⁴: **B60S 1/38**

(22) Date of filing: 09.08.88

(43) Date of publication of application:
**14.02.90 Bulletin 90/07**

(84) Designated Contracting States:
**AT BE CH DE ES FR GB GR IT LI LU NL SE**

(71) Applicant: **Chen, Liang-An**
**No. 180, Hsin Min Street Dan Shui**
**Taipei(TW)**

(72) Inventor: **Chen, Liang-An**
**No. 180, Hsin Min Street Dan Shui**
**Taipei(TW)**

(74) Representative: **Gordon, Michael Vincent et al**
**GILL JENNINGS & EVERY 53-64 Chancery**
**Lane**
**London WC2A 1HN(GB)**

(54) Wipers for windscreens and like surfaces.

(57) A windshield wiper has a first yoke member 101 and a second yoke member 102 pivotally connected to one end of the first yoke member 101 by an adapter 110. The end of the first yoke member 101 is formed into a channel 11 provided with a locking hole 15, and the adapter 110 has an upper wall 34 provided with a latch 36 and has two side walls 33, 33 provided with bearing holes 31, 31. The second yoke member 102 has two pivot studs 21, 21 extending from its two opposite sides to fit into the bearing holes 31, 31 of the adapter 110, which is then slid into the channel 11 until the latch 36 of the adapter 110 fits into the locking hole 15 of the channel 11. The windshield wiper can be assembled and disassembled without the need of special tools or skills.

FIG. 4

FIG. 5

## WIPERS FOR WINDSCREENS AND LIKE SURFACES

The present invention relates to wipers for windscreens and like surfaces, by which is meant for example headlights and rear windows of motor vehicles, and more particularly to such wipers having improved yoke member connecting joints.

Usually, a wiper of this kind has a first yoke member and a second yoke member which is pivotally connected to an end of the first yoke member by means of a rivetted connecting joint, but this leads to inconvenience of assembly resulting from a need for special skills and tools and further leads to great difficulties in disassembly.

In accordance with the present invention, however, a wiper for windscreens and like surfaces comprises a first yoke member and a second yoke member pivotally connected to an end of the first yoke member, characterised in that

said end of the first yoke member is formed into a channel, and

said second yoke member has a point along its length provided with two pivot studs extending from its opposite sides, said pivot studs being pivotally connected to an adapter which is detachably fitted into said channel of said first yoke member.

Preferably, said channel has an upper wall provided with a locking hole and has two side walls provided with holding fingers.

Also preferably, said adapter has an upper wall provided with a latch to fit into said locking hole of said channel and has two side walls provided with bearing holes in which said pivot studs of said second yoke member are fitted, said adapter has a flange to abut an end of said channel when said latch fits into said locking hole, and said adapter is formed in one piece of a plastics material, the latch being integrally formed with the adapter so as to render resiliency to the latch.

To assemble the first yoke member and the second yoke member, the adapter is first mounted onto the second yoke member by resiliently expanding the two side walls of the adapter to enable the second yoke member to fit inbetween the two side walls of the adapter and to allow the two pivot studs of the second yoke member to fit into the bearing holes of the adapter. The adapter is then slid into the channel of the first yoke member until the flange on the adapter abuts said end of the channel, whereupon the latch of the adapter engages in the locking hole of the channel of the first yoke member to lock the adapter in place.

In one arrangement, said first yoke member is a main yoke member for attachment to a wiper arm, and there are two of said second yoke members formed as subsidiary yoke members attached to respective ends of said first yoke member.

In another arrangement, said first yoke member is a subsidiary yoke member for attachment to a main yoke member, and there is a single second yoke member attached to one end of said subsidiary yoke member, whose other end is for attachment to a wiper blade.

Two wipers, according to the present invention, will now be described, by way of example only, with reference to the accompanying drawings, in which:-

Figure 1 is a schematic front view of a conventional windshield wiper;

Figure 2 is a schematic front view of a first windshield wiper embodying this invention;

Figure 3 is a perspective view of the connecting joint of the second yoke member and the first yoke member of the windshield wiper of Figure 2, viewed from below, with the blade member removed and a half part of the first yoke member omitted;

Figure 4 is an exploded, perspective view of the connecting joint of Figure 3;

Figure 5 is an enlarged perspective view of the adapter and the channel of the first yoke member of Figure 2, showing their relationship; and

Figure 6 is a schematic front view of a second windshield wiper embodying this invention.

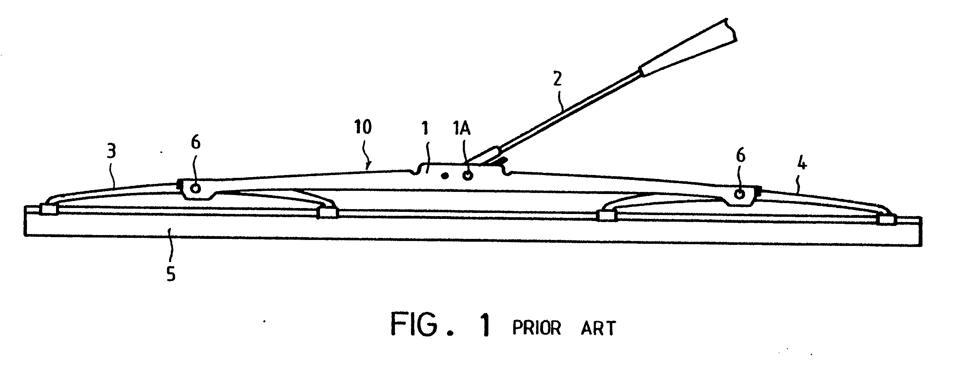

A conventional windshield wiper designated by numeral 10 in Figure 1, has a main yoke member 1 provided with a mounting pin 1A at its midpoint to enable windshield wiper 10 to be pivotally connected to the end of a wiper arm 2, subsidiary yoke members 3, 4 pivotally connected to each one of the two ends of main yoke member 1 by a pin 6, and a blade member 5 fixedly mounted onto the ends of subsidiary yoke members 3, 4, the pins 6 having been rivetted onto the ends of main yoke member 1.

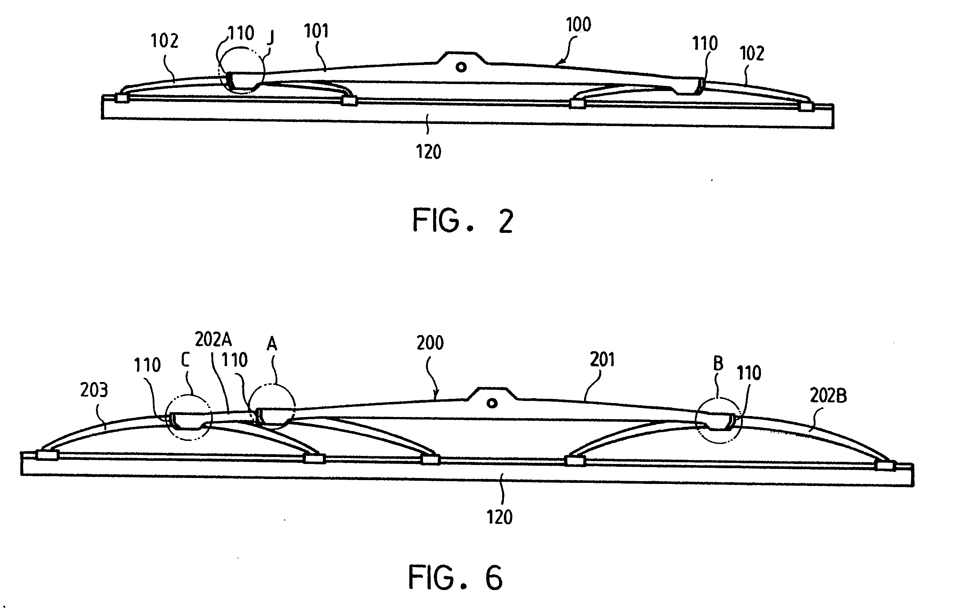

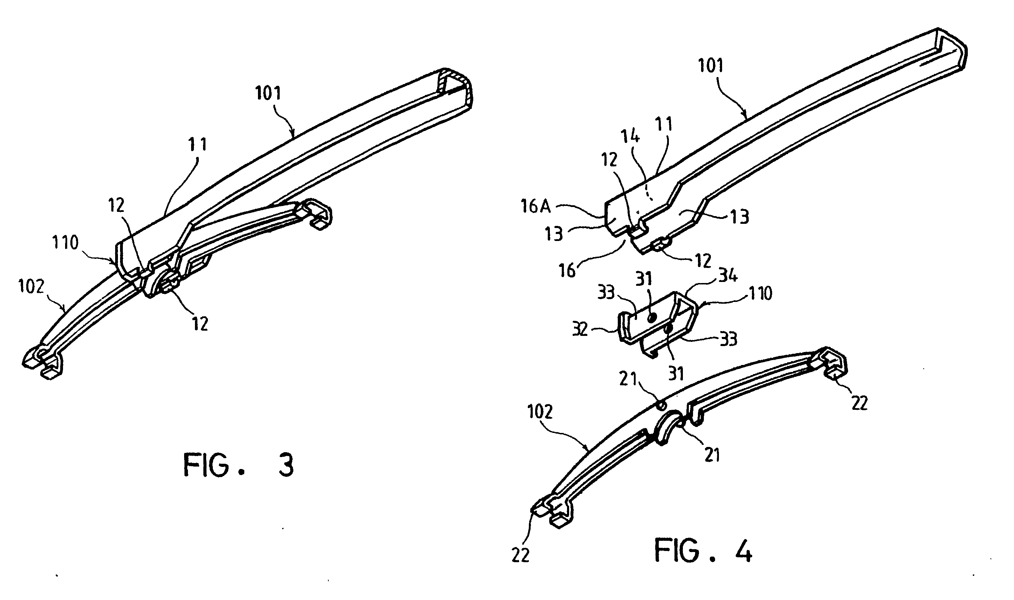

As shown in Figure 2, however, a first windshield wiper 100 embodying this invention consists of a first yoke member 101, two second yoke members 102, 102, each one of which has a midpart pivotally connected to one end of first yoke member 101 by an adapter 110, and a blade member 120 firmly connected to the ends of second yoke members 102, 102.

As shown in Figures 3 to 5, first yoke member 101 has two ends, each one of which is formed into a channel 11 having an upper wall 14 and two side walls 13, 13 extending from the two side edges of upper wall 14 to constitute a square U-shaped configuration. Each one of the two side walls 13, 13 has a lower edge provided with a holding finger 12 bent inwards to hold adapter 110, and the upper wall 14 is provided with a locking hole 15. The channel 11 has an end opening 16 to allow adapter 110 to be slid into and pulled out from channel 11 through end opening 16.

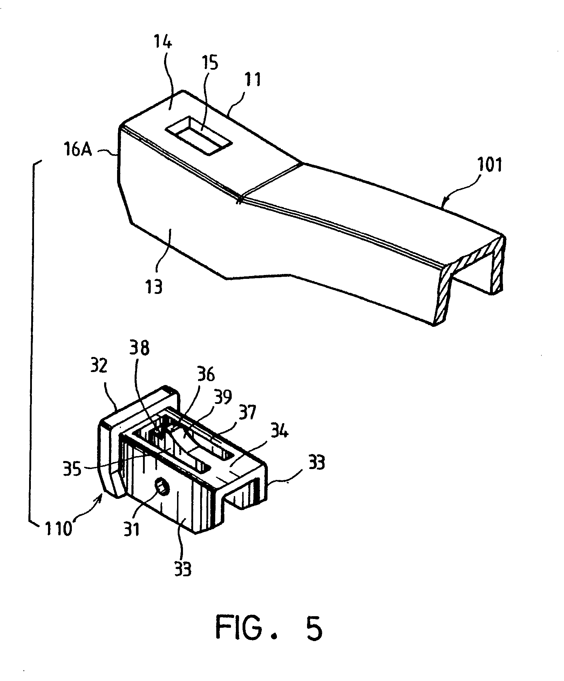

Adapter 110 has an upper wall 34, two side walls 33, 33 extending downwards from the two side edges of upper wall 34 so as to form a member having a square U-shaped cross section, a flange 32 at a first end leaving a second, opposite end free, and a bearing hole 31 in each one of side walls 33, 33. As shown in Figure 5, upper wall 34 is provided with a U-shaped slot 37 to form a tongue 35 extending toward the first end of adapter 110. Tongue 35 has a latch 36 protruding upwards from the upper surface of tongue 35, latch 36 having a first side 38 perpendicular to the upper surface of tongue 35 and facing the first end of adapter 110, and a second, opposite side 39 tapering towards the second end of adapter 110. Latch 36, together with tongue 35, is integrally formed with adapter 110 and is capable of flexing in a vertical direction. Adapter 110 is preferably made of moulded plastics material and is formed to fit into channel 11. When flange 32 abuts end 16A of channel 11, latch 36 snaps into locking engagement with locking hole 15 of channel 11.

As shown in Figure 4, second yoke member 102 has a midpoint provided with pivot studs 21, 21 extending from two opposite sides of second yoke member 102 to correspond with bearing holes 31, 31 of adapter 110. Second yoke member 102 may have two ends 22 of which each one is formed into a cuff-like shape for securing thereon a blade member.

To assemble first yoke member 101, adapter 110, and second yoke member 102, adapter 110 is first fitted over midpoint of second yoke member 102, by slightly resiliently expanding two side walls 33, 33 of adapter 110 outwardly to allow the midpoint of second yoke member 102 having pivot studs 21, 21 to fit inbetween two side walls 33, 33 of adapter 110, and allowing pivot studs 21, 21 to fit into bearing holes 31, 31 of adapter 110. Then adapter 110, with second yoke member 102 assembled therewith, is fitted into channel 11 of first yoke member 102 by passing second yoke member 102 and adapter 110 through end opening 16 of channel 11, until adapter 110 is fitted into channel 11 with flange 32 of adapter 110 abutting end 16A of channel 11. At this position latch 36 fits into locking hole 15 of channel 11, with its first side 38 abutting an edge of locking hole 15 to lock adapter 110 in place, so as to constitute a pivotal, yoke connecting joint J (Figure 2).

To disassemble adapter 110 from channel 11 of first yoke member 101, one may simply depress latch 36 to disengage its first side 38 from the edge of locking hole 15 and then pull adapter 110 with second yoke member 102 out from channel 11 through end opening 16 of channel 11 of first yoke member 101. Adapter 110 can be disassembled from second yoke member 102 by plying open two side walls 33, 33 of adapter 110 to allow pivot studs 21, 21 of second yoke member 102 to disengage from bearing holes 31, 31 of adapter 110.

The above assembling and disassembling processes can be performed easily without the need of special tools or skills.

In the above-described arrangement, the first yoke member 101 is a main yoke member and each of the two second yoke members 102 is a subsidiary yoke member. However, Figure 6 shows an alternative windshield wiper 200 embodying this invention and having a first yoke member 201, two second yoke members 202A and 202B of which each one has a point along its length pivotally connected to one end of first yoke member 201 by an adapter 110, and a third yoke member 203 having a midpoint pivotally connected to one end of second yoke member 202A by an adapter 110. A blade member 120 is firmly secured onto the two ends of second yoke member 202B, just one end of second yoke member 202A, and the two ends of third yoke member 203. This windshield wiper has three yoke connecting joints A, B, C of which each one is identical with the yoke connecting joint J described above, whereby a detailed description of yoke connecting joints A, B, C is not necessary. It will, however, be noted that in this arrangement, at joint C, second yoke member 202A is a subsidiary yoke member corresponding functionally to a first yoke member, and third yoke member 203 corresponds functionally to a second yoke member.

Although the channel 11 is shown as being of square U-shaped cross section, it could be of rounded U-shaped cross section if preferred in any given circumstances.

## Claims

1. A wiper, for windscreens and like surfaces, comprising a first yoke member (101;201;202A) and a second yoke member (102;202A,202B;203) pivotally connected to an end of the first yoke member, characterised in that
said end of the first yoke member is formed into a channel (11), and
said second yoke member has a point along its length provided with two pivot studs (21, 21) extending from its opposite sides, said pivot studs (21, 21) being pivotally connected to an adapter (110) which is detachably fitted into said channel (11) of said first yoke member.

2. A wiper according to claim 1, characterised in that
said channel (11) has an upper wall (14) provided with a locking hole (15) and has two side walls (13, 13) provided with holding fingers (12, 12), and said adapter (110) has an upper wall (34) provided with a latch (36) to fit into said locking hole (15) of said channel (11) and has two side walls (33, 33) provided with bearing holes (31, 31) in which said pivot studs (21, 21) of said second yoke member are fitted.

3. A wiper according to claim 2, characterised in that said adapter (110) has a flange (32) to abut an end (16A) of said channel (11) when said latch (36) fits into said locking hole (15).

4. A wiper according to any preceding claim, characterised in that said adapter (110) is formed in one piece of a plastics material.

5. A wiper according to any one of claims 1 to 4, characterised in that said first yoke member is a main yoke member (101;201) for attachment to a wiper arm, and there are two of said second yoke members formed as subsidiary yoke members (102,102;202A,202B) attached to respective ends of said first yoke member.

6. A wiper according to any one of claims 1 to 4, characterised in that said first yoke member is a subsidiary yoke member (202A) for attachment to a main yoke member (201), and there is a single second yoke member (203) attached to one end of said subsidiary yoke member, whose other end is for attachment to a wiper blade.

FIG. 1 PRIOR ART

EP 0 354 279 A1

FIG. 2

FIG. 6

FIG. 3

FIG. 4

FIG. 5

European Patent
Office

EUROPEAN SEARCH REPORT

Application Number

EP 88 30 7345

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 236 061 (TRICO-FOLBERTH)<br>* Whole document * | 1-4 | B 60 S 1/38 |
| Y | | 5,6 | |
| Y | US-A-3 130 437 (ANDERSON)<br>* Whole document * | 5 | |
| Y | US-A-2 866 219 (SCINTA)<br>* Whole document * | 6 | |

TECHNICAL FIELDS
SEARCHED (Int. Cl.4)

B 60 S

The present search report has been drawn up for all claims

| Place of search | Date of completion of the search | Examiner |
|---|---|---|
| THE HAGUE | 07-04-1989 | GEYER J.L. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
............................................................
& : member of the same patent family, corresponding
   document

EPO FORM 1503 03.82 (P0401)